# EUROPÄISCHE PATENTANMELDUNG

(11) **EP 3 640 082 A1**
(43) Veröffentlichungstag der Anmeldung: **22.04.2020**
(21) Anmeldenummer: 19202309.1
(22) Anmeldetag: 09.10.2019
(51) Int. Cl.: B60L 53/30, B60L 53/63, B60L 53/65, B60L 53/66, B60L 53/67, B60L 53/68, B60L 55/00, B60L 58/12, H02J 7/00, H02J 11/00, G06Q 10/02

(54) **VERSORGUNGSSTATION FÜR ELEKTRISCH BETREIBBARE FAHRZEUGE UND BETRIEBSVERFAHREN HIEFÜR**

(30) Priorität: 16.10.2018 DE 102018125670
(71) Anmelder: Elektro-Bauelemente GmbH, 44536 Lünen (DE)
(72) Erfinder: Kachouh, Checrallah, 44227 Dortmund (DE)
(74) Vertreter: Wickord, Wiro

(57) **Zusammenfassung**

Die Erfindung betrifft Betriebsverfahren für eine Versorgungsstation umfasst eine Steuereinheit zum Durchführen eines Ladevorgangs und/oder eines Entladevorgangs einer Fahrzeugbatterie, Mittel zum Empfangen oder Senden von Daten, eine Nutzerschnittstelle mit einer Anzeigeeinheit sowie Schaltmittel, Anschlussmittel und Übertragungsmittel, welche angeordnet und ausgebildet sind zur Realisierung eines uni- oder bidirektionalen Energieflusses zwischen einem Versorgungsnetz, an dem die Versorgungsstation angeschlossen ist, und der Fahrzeugbatterie, wobei über die Mittel zum Empfangen und/oder Senden von Daten ein erster Betriebsbefehl, der von einer ersten externen, ortsfern vorgesehenen Steuerzentrale an die Versorgungsstation gesendet wird, empfangen und dann von der Steuereinheit verarbeitet wird, wobei nach dem Erhalt des ersten Betriebsbefehls ein zweiter Betriebsbefehl von einem anderen Befehlsgeber an die Versorgungsstation übermittelt wird, wobei der zweite Betriebsbefehl über die Mittel zum Empfangen und/oder Senden von Daten empfangen wird und wobei der zweite Betriebsbefehl dann von der Steuereinheit verarbeitet wird.

## Beschreibung

Die Erfindung betrifft ein Betriebsverfahren für eine Versorgungsstation umfassend eine Steuereinheit zum Durchführen eines Ladevorgangs und/oder eines Entladevorgangs für eine Fahrzeugbatterie, Mittel zum Empfangen oder Senden von Daten, eine Nutzerschnittstelle mit einer Anzeigeeinheit, Schaltmittel, Anschlussmittel und Übertragungsmittel, welche angeordnet und ausgebildet sind zur Realisierung eines uni- oder bidirektionalen Energieflusses zwischen einem Versorgungsnetz, an dem die Versorgungsstation angeschlossen ist, und der Fahrzeugbatterie, wobei über die Mittel zum Empfangen und/oder Senden von Daten ein erster Betriebsbefehl, der von einer ersten externen, ortsfern vorgesehenen Steuerzentrale an die Versorgungsstation gesendet wird, empfangen und dann von der Steuereinheit verarbeitet wird. Ferner betrifft die Erfindung eine Versorgungsstation zum Laden und/oder Entladen einer Fahrzeugbatterie eines elektrisch betreibbaren Fahrzeugs.

Heute verfügbare Versorgungsstationen für Elektrofahrzeuge sind im privaten Umfeld oder verteilt im öffentlichen Raum installiert. Die Versorgungsstationen werden typischerweise von einem Betreiber unterhalten, welcher ortsfern zu der Versorgungsstation eine externe Steuerzentrale unterhält. Die Versorgungsstation kommuniziert mit der Steuerzentrale. Beispielsweise werden Zählerstände zum Zweck der Abrechnung von der Versorgungsstation an die Steuerzentrale übermittelt und eine Berechtigung eines Nutzers zur Durchführung eines Ladevorgangs wird geprüft, indem eine Benutzerkennung von der Versorgungsstation an die Steuerzentrale übertragen wird. Sofern die Steuerzentrale den Nutzer identifizieren kann, autorisiert die Steuerzentrale den Ladevorgang, indem sie entsprechende Freigabedaten an die Versorgungsstation überträgt.

Zukünftig werden Versorgungsstationen für Elektrofahrzeuge stärker in die übergeordnete Netzinfrastruktur beziehungsweise das Versorgungsnetz der lokalen beziehungsweise regionalen Energieversorger eingebunden werden. Die Einbindung erfolgt beispielsweise in Bezug auf eine Netzstabilisierung. Insofern soll die Versorgungsstation dazu beitragen, eine Überlastung des Netzes auszugleichen beziehungsweise zu vermeiden.

Aufgabe der vorliegenden Erfindung ist es, eine in Bezug auf die stärkere Integration in das Versorgungsnetz ausgelegte Versorgungsstation und ein Betriebsverfahren für eine in das Versorgungsnetz integrierte Versorgungsstation anzugeben.

Zur Lösung der Aufgabe ist die Erfindung in Verbindung mit dem Oberbegriff des Patentanspruchs 1 dadurch gekennzeichnet, dass nach dem Erhalt des ersten Betriebsbefehls ein zweiter Betriebsbefehl von einem anderen ortsfernen Befehlsgeber als der ersten Steuerzentrale an die Versorgungsstation übermittelt wird, dass der zweite Betriebsbefehl über die Mittel zum Empfangen und/oder Senden von Daten empfangen wird und dass der zweite Betriebsbefehl dann von der Steuereinheit verarbeitet wird.

Der besondere Vorteil der Erfindung besteht darin, dass die Versorgungsstation eine Mehrzahl von Betriebsbefehlen von unterschiedlichen Befehlsgebern empfangen und verarbeiten kann. Neben intern generierten Betriebsbefehlen, welche sich aus einer Ablauflaufsteuerung der Versorgungsstation ergeben können, sowie Betriebsbefehlen, die gegebenenfalls über lokale Betätigungs- beziehungsweise Eingabemittel vor Ort an der Versorgungsstation erzeugt werden, sieht das erfindungsgemäße Betriebsverfahren insofern vor, Betriebsbefehle von der ersten externen Steuerzentrale, das heißt vom Betreiber der Versorgungsstation zu empfangen und zu verarbeiten und darüber hinaus Betriebsbefehle aus einer anderen externen, ortsfernen Quelle zu empfangen und zu verarbeiten. Die andere Quelle kann beispielsweise der Betreiber des Versorgungsnetzes sein, an dem die Versorgungsstation angeschlossen ist.

Im Sinne der Erfindung wird ein Betriebsbefehl von der Steuereinheit verarbeitet, solange Verarbeitungsroutinen allein in der Steuereinheit ablaufen. Beispielsweise kann bei der Verarbeitung des Betriebsbefehls dessen Zulässigkeit beziehungsweise Verträglichkeit mit einem aktuellen Betriebszustand der Versorgungsstation überprüft werden. Im Sinne der Erfindung wird ein Betriebsbefehl ausgeführt, wenn die Steuereinheit im Zusammenwirken mit einer weiteren Funktionskomponente der Versorgungsstation, beispielsweise einem Schaltmittel, weiteren Steuerungsbeziehungsweise Regelungsmitteln, einem Sensor, einem Messmittel, einem Energiemengen- beziehungsweise Stromzähler oder dergleichen ein Ladevorgang durchführt beziehungsweise Energie aus der Fahrzeugbatterie ins Versorgungsnetz zurückgespeist wird. Beispielsweise wird ein Betriebsbefehl ausgeführt, wenn im Zusammenwirken mit den Mitteln zum Empfangen und/oder Senden von Daten Betriebsdaten nach extern übertragen werden.

Im Sinne der Erfindung ist ein Befehlsgeber als externer Befehlsgeber bezeichnet, wenn die Befehle nicht von der Versorgungsstation selbst beziehungsweise der Steuereinheit intern erzeugt sind. Der Betriebsbefehl stammt von einem ortsfernen Befehlsgeber, wenn keine lokale Interaktion mit der Versorgungsstation stattfindet - beispielsweise über Betätigungs- beziehungsweise Eingabemittel der Versorgungsstation - oder die Betriebsbefehle nicht intern erzeugt sind. Beispielsweise sind Betriebsbefehle extern, wenn sie vom Betreiber der Versorgungsstation beziehungsweise der ersten Steuerzentrale oder dem Betreiber des Versorgungsnetzes stammen.

Nach einer bevorzugten Ausführungsform der Erfindung wird jedem Betriebsbefehl, der von extern an die Versorgungsstation gesendet wird, eine Ausführungspriorität zugeordnet. Die Ausführungspriorität dient insbesondere dazu, eine Ausführungsreihenfolge der unterschiedlichen Betriebsbefehle festzulegen. Die Ausführungspriorität kann beispielsweise zusammen mit dem Betriebsbefehl als Teil desselben von dem externen Befehlsgeber beziehungsweise der ersten externen Steuerzentrale empfangen oder durch interne Verarbeitungsroutinen aufseiten der Versorgungsstation selbst bestimmt werden.

Nach einer Weiterbildung der Erfindung vergleicht die Steuereinheit der Versorgungsstation bei der Verarbeitung von mehreren Betriebsbefehlen die Ausführungsprioritäten der zu verarbeitenden Betriebsbefehle. Bei unterschiedlichen Ausführungsprioritäten wird dann der am höchsten priorisierte Betriebsbefehl ausgeführt. Beispielsweise kann der geringer priorisierte Betriebsbefehl im Nachgang ausgeführt werden oder die Ausführung des geringer priorisierten Betriebsbefehls kann abgebrochen, ausgesetzt, unterbrochen beziehungsweise verweigert werden.

Nach einer Weiterbildung der Erfindung wird bei der Verarbeitung und/oder Ausführung von wenigstens zwei Betriebsbefehlen von der Steuereinheit der Versorgungsstation eine Kollisionsprüfung durchgeführt in Bezug auf die Verträglichkeit der Betriebsbefehle. Vorteilhaft kann durch das Durchführen der Kollisionsprüfung bestimmt werden, ob die Betriebsbefehle kompatibel sind und dann widerspruchsfrei zeitgleich oder zeitig versetzt durchgeführt werden können oder ob es im Falle einer Kollision notwendig ist, die Ausführung von wenigstens einem Betriebsbefehl zurückzustellen, abzubrechen, zu unterbrechen oder gänzlich zu blockieren.

Nach einer Weiterbildung der Erfindung wird der zweite Betriebsbefehl, der von der zweiten externen Steuerzentrale, das heißt dem Betreiber des Versorgungsnetzes an die Versorgungsstation gesendet wird, höher priorisiert als der erste Betriebsbefehl, welcher von der ersten Steuerzentrale, das heißt dem Betreiber der Versorgungsstation bereitgestellt ist. Vorteilhaft kann hierdurch sichergestellt werden, dass die Netzstabilität dienende Betriebsbefehle mit einer hohen Ausführungspriorität versehen sind. Die Netzstabilität erhält hierdurch Vorrang beispielsweise vor einem Ladebefehl des Nutzers.

Nach einer Weiterbildung der Erfindung enthalten die Betriebsbefehle Ladevorgabedaten und/oder Entladedaten und es werden die Betriebsfehle am höchsten priorisiert, die zu einer maximalen Entlastung des Versorgungsnetzes führen. Vorteilhaft wird auch hierdurch ein Beitrag zur Netzstabilisierung geleistet.

Nach einer Weiterbildung der Erfindung wird der Betriebsbefehl mit den geringsten Ladevorgabedaten am höchsten priorisiert und/oder ausgeführt. Ladevorgabedaten sind in diesem Kontext insbesondere eine aus dem Versorgungsnetz in die Fahrzeugbatterie zu speisende Energiemenge, ein Ladestromvorgabewert und eine Ladeleistung. Beispielsweise ist durch die Ladevorgabedaten spezifiziert, dass die Fahrzeugbatterie mit einer Ladeleistung von 10 kW geladen werden soll. Vorteilhaft kann bei der Priorisierung beziehungsweise Ausführung des Betriebsbefehls mit den geringsten Ladevorgabedaten in besonders einfacher Weise sichergestellt werden, dass eine unzulässige hohe Belastung des Versorgungsnetzes vermieden wird. Auch hier ist insofern der Netzstabilität eine Priorität eingeräumt gegenüber individuellen Ladevorgabedaten, welche vom Betreiber der Versorgungsstation oder dem Nutzer selbst spezifiziert sind.

Nach einer alternativen Ausführungsform der Erfindung können Angaben zur Ladedauer Gegenstand der Betriebsbefehle sein. In diesem Fall wird das Versorgungsnetz gering belastet, wenn die Ladedauer groß ist. Insofern kann der Betriebsbefehl mit der größten Ladedauer am höchsten priorisiert werden.

Nach einer Weiterbildung der Erfindung wird der Betriebsbefehl mit den höchsten Endladevorgabedaten höher priorisiert beziehungsweise ausgeführt. Vorteilhaft kann hierdurch bedarfsgerecht eine Entlastung des Versorgungsnetzes herbeigeführt werden, indem möglichst viel Energie aus der Fahrzeugbatterie ins Versorgungsnetz eingespeist wird.

Nach einer Weiterbildung der Erfindung sieht die Versorgungsstation Messmittel vor, welche mit der Steuereinheit zusammenwirken. Mit den Messmitteln werden insbesondere während des Ladevorgangs Messwerte, beispielsweise Strom-, Energie-, Leistungs-, Spannungs- und/oder Frequenzwerte, gemessen. Die Messwerte werden über die Mittel zum Empfangen und/oder Senden von Daten an die erste Steuerzentrale übertragen.

Nach einer Weiterbildung der Erfindung weist die Nutzerschnittstelle der Versorgungsstation zusätzlich zu der Anzeigeeinheit eine Eingabeeinheit auf. Über die Eingabeeinheit der Nutzerschnittstelle wird der Steuereinheit ein weiterer Betriebsbefehl zur Verarbeitung zugeführt. Vorteilhaft kann durch das Vorsehen der lokalen Eingabeeinheit der Nutzer selbst unmittelbar Einfluss nehmen auf den Ladevorgang. Beispielsweise kann er eine Schnellladung initiieren oder einen laufenden Ladevorgang abbrechen. Die Betriebsbefehle, die über die lokale Nutzerschnittstelle bereitgestellt werden, können wie die von extern empfangenen Betriebsbefehl der Steuereinheit zugeführt und dort unter Berücksichtigung ihrer Priorität und/oder einer möglich Kollisionssituation verarbeitet und ausgeführt werden.

Nach einer Weiterbildung der Erfindung sieht die Versorgungsstation eine Mehrzahl von Anschlussmitteln auf, die dazu ausgebildet sind, die Fahrzeuge mit der Versorgungsstation zu verbinden. Das erfindungsgemäße Betriebsverfahren ist dabei so ausgebildet, dass die Betriebsbefehle wahlweise für ein bestimmtes, insbesondere ein in dem Betriebsbefehl selbst oder durch die Steuereinheit bestimmtes Anschlussmittel ausgeführt werden, oder dass Betriebsbefehle für eine Teilmenge aller Anschlussmittel oder für alle Anschlussmittel der Versorgungsstation ausgeführt werden. Vorteilhaft kann das erfindungsgemäße Betriebsverfahren insofern auch für Versorgungsstationen verwendet werden, welche ausgebildet sind zum gleichzeitigen Anschluss einer Mehrzahl von elektrisch betreibbaren Fahrzeugen und insofern selbst ein Energiesubnetz definieren.

Nach einer Weiterbildung der Erfindung werden die Betriebsbefehle der ersten Steuerzentrale kabellos und die Betriebsbefehle der zweiten Steuerzentrale kabellos oder kabelgebunden an die Mittel zum Empfangen und/oder Senden von Daten übertragen. Beispielsweise überträgt die erste Steuerzentrale die Betriebsbefehle über eine Mobilfunkschnittstelle, wohingegen die zweite Steuerzentrale über eine Powerline-Communication mit der Versorgungsstation interagiert. Erfindungsgemäß können insofern unterschiedliche Mittel zum Empfangen und Senden von Daten an die erste Steuerzentrale und an die zweite Steuerzentrale vorgesehen werden.

Nach einer Weiterbildung der Erfindung werden die Betriebsbefehle, die über die Eingabeeinheit der Nutzerschnittstelle bereitgestellt werden, kabelgebunden der Steuereinheit zugeführt. Alternativ kann die Eingabeeinheit der Nutzerschnittstelle als eine externe, lokale Eingabeeinheit realisiert sein, wobei die Eingabeeinheit über eine Nahfeldkommunikationsroutine, beispielsweise WLAN oder Bluetooth, mit der Versorgungsstation kommuniziert. Als externe, lokale Eingabeeinheit kommt beispielsweise ein Mobiltelefon des Nutzers infrage, welches eine Datenverbindung mit der Versorgungsstation aufbaut und zur Eingabe von Befehlen dient.

Nach einer Weiterbildung der Erfindung werden der erste Betriebsbefehl von der erste Steuerzentrale und der zweite Betriebsbefehl, welcher insbesondere von der zweiten Steuerzentrale empfangen werden kann, von einem gleichen, gemeinsamen Mittel zum Empfangen und/oder Senden von Daten empfangen. Vorteilhaft vereinfacht sich hierdurch der Aufbau der Versorgungsstation, da auf unterschiedliche Mittel zum Empfangen und Senden von Daten verzichtet werden kann.

Nach einer Weiterbildung der Erfindung bestimmt die Steuereinheit Prognosedaten zu einem aktuellen Ladebedarf und/oder einem aktuellen Entladevermögen der Fahrzeugbatterie. Bei der Bestimmung der Prognosedaten werden ein Ladegrad der Fahrzeugbatterie und/oder der Ladebedarf sowie eine aktuelle Lade- und/oder Entladeleistung ermittelt und/oder verarbeitet. Vorteilhaft kann durch das Ermitteln der Prognosedaten insbesondere ein kurzfristiger Energiebedarf dem Betreiber des Versorgungsnetzes und/oder dem Betreiber der Versorgungsstation und/oder dem Nutzer mitgeteilt werden. Der Betreiber des Versorgungsnetzes kann dann eine Abschätzung zur kurzfristig zukünftig zu erwartenden Netzbelastung für viele verschiedene Versorgungsstationen und/oder andere Verbraucher im Versorgungsnetz ermitteln. Sofern es eine relevante Diskrepanz zwischen Angebot und Nachfrage gibt, kann vonseiten des Betreibers des Versorgungsnetzes der zweite Betriebsbefehl mit angepassten Ladevorgabe- beziehungsweise Entladevorgabedaten an die verschiedenen Versorgungsstationen gesendet werden.

Zur Lösung der Aufgabe weist die Erfindung die Merkmale des Patentanspruchs 17 auf. Demzufolge sieht die Versorgungsstation zum Laden und/oder Entladen einer Fahrzeugbatterie eines elektrisch betreibbaren Fahrzeugs eine erste Empfangseinheit auf, welche ausgebildet ist zum Empfangen von Betriebsbefehlen von einer ersten externen Steuerzentrale. Darüber hinaus weist die erfindungsgemäße Versorgungsstation eine zweite Empfangseinheit auf, welche ausgebildet ist zum Empfangen von Betriebsbefehlen von einer zweiten, externen Steuerzentrale. Zusätzlich ist eine lokale Nutzerschnittstelle mit einer Anzeigeeinheit und einer Eingabeeinheit zum Eingeben von Betriebsbefehlen vorgesehen. Des Weiteren sind Anschlussmittel, Schaltmittel und Übertragungsmittel vorgesehen, welche dazu dienen, im Zusammenwirken mit einer Steuereinheit der Versorgungsstation den Ladevorgang durchzuführen und einen uni- beziehungsweise bidirektionalen Energiefluss zwischen dem Versorgungsnetz, an das die Versorgungsstation angeschlossen ist, und der Fahrzeugbatterie herzustellen.

Der besondere Vorteil der Erfindung besteht darin, dass die erfindungsgemäße Versorgungsstation neben der lokalen Nutzerschnittstelle zwei getrennt Empfangseinheiten vorsieht zur Kommunikation mit der ersten externen Steuerzentrale und der zweiten externen Steuerzentrale. Die Versorgungsstation ist insofern vorrichtungsseitig in der Lage, über die erste externe ortsferne Steuerzentrale mit dem Betreiber der Versorgungsstation einerseits und über die zweite externe ortsferne Steuerzentrale mit dem Betreiber des Versorgungsnetzes andererseits zu kommunizieren und zu interagieren. Die Integration in das Versorgungsnetz ist insofern sichergestellt beziehungsweise verbessert. Beispielsweise ist die erste Empfangseinheit durch eine Mobilfunkschnittstelle gebildet, wohingegen die zweite Empfangseinheit als eine verdrahtete Schnittstelle realisiert ist. Die Kommunikation über die zweite Empfangseinheit kann beispielsweise über die Energieleitung erfolgen (Powerline-Communication).

Erfindungsgemäß beschriebene Merkmale und Details der Versorgungsstation gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden.

## Patentansprüche

1. Betriebsverfahren für eine Versorgungsstation umfasst
- eine Steuereinheit zum Durchführen eines Ladevorgangs und/oder eines Entladevorgangs einer Fahrzeugbatterie,
- Mittel zum Empfangen oder Senden von Daten,
- eine Nutzerschnittstelle mit einer Anzeigeeinheit,
- Schaltmittel, Anschlussmittel und Übertragungsmittel, welche angeordnet und ausgebildet sind zur Realisierung eines uni- oder bidirektionalen Energieflusses zwischen einem Versorgungsnetz, an dem die Versorgungsstation angeschlossen ist, und der Fahrzeugbatterie,
wobei über die Mittel zum Empfangen und/oder Senden von Daten ein erster Betriebsbefehl, der von einer ersten externen, ortsfern vorgesehenen Steuerzentrale an die Versorgungsstation gesendet wird, empfangen und dann von der Steuereinheit verarbeitet wird, **dadurch gekennzeichnet, dass** nach dem Erhalt des ersten Betriebsbefehls ein zweiter Betriebsbefehl von einem anderen Befehlsgeber an die Versorgungsstation übermittelt wird, dass der zweite Betriebsbefehl über die Mittel zum Empfangen und/oder Senden von Daten empfangen wird und dass der zweite Betriebsbefehl dann von der Steuereinheit verarbeitet wird.

2. Betriebsverfahren nach Anspruch 1, **dadurch gekennzeichnet, dass** jedem Betriebsbefehl eine Ausführungspriorität zugeordnet wird.

3. Betriebsverfahren nach Anspruch 2, **dadurch gekennzeichnet, dass** die Steuereinheit der Versorgungsstation bei der Verarbeitung der Betriebsbefehle die Ausführungspriorität der Betriebsbefehle vergleicht und/oder dass bei unterschiedlichen Ausführungsprioritäten der am höchsten priorisierte Betriebsbefehl ausgeführt wird.

4. Betriebsverfahren nach einem der Ansprüche 1 bis 3, **dadurch gekennzeichnet, dass** bei der Verarbeitung und/oder Ausführung von wenigstens zwei Betriebsbefehlen von der Steuereinheit der Versorgungsstation eine Kollisionsprüfung durchführt in Bezug auf die Verträglichkeit der Betriebsbefehle.

5. Betriebsverfahren nach einem der Ansprüche 1 bis 4, **dadurch gekennzeichnet, dass** der zweite Betriebsbefehl von einer zweiten externen, ortsfern vorgesehenen Steuerzentrale an die Servicestation gesendet wird.

6. Betriebsverfahren nach einem der Ansprüche 1 bis 5, **dadurch gekennzeichnet, dass** die Nutzerschnittstelle zusätzlich zu der Anzeigeeinheit eine Eingabeeinheit aufweist und dass ein weiterer Betriebsbefehl lokal über die Eingabeeinheit der Nutzerschnittstelle generiert und der Steuereinheit zur Verarbeitung zugeführt wird.

7. Betriebsverfahren nach Anspruch 5 oder 6, **dadurch gekennzeichnet, dass** der zweite Betriebsbefehl der zweiten externen Steuerzentrale höher priorisiert wird als der erste Betriebsbefehl der ersten externen Steuerzentrale und/oder der weitere Betriebsbefehl, der über die Eingabeeinheit der Nutzerschnittstelle generiert wird.

8. Betriebsverfahren nach einem der Ansprüche 1 bis 7, **dadurch gekennzeichnet, dass** die Betriebsbefehle Ladevorgabedaten und/oder Entladevorgabedaten enthalten.

9. Betriebsverfahren nach Anspruch 8, **dadurch gekennzeichnet, dass** die Betriebsbefehle den Ladevorgabedaten und/oder Entladevorgabedaten am höchsten priorisiert werden, die den höchsten Beitrag leisten zur Stabilisierung des Versorgungsnetzes.

10. Betriebsverfahren nach Anspruch 8 oder 9, **dadurch gekennzeichnet, dass** der Betriebsbefehl mit den geringsten Ladevorgabedaten am höchsten priorisiert und/oder ausgeführt wird.

11. Betriebsverfahren nach einem der Ansprüche 8 bis 10, **dadurch gekennzeichnet, dass** der Betriebsbefehl mit den höchsten Entladevorgabedaten am höchsten priorisiert und/oder ausgeführt wird.

12. Betriebsverfahren nach einem der Ansprüche 1 bis 11, **dadurch gekennzeichnet, dass** die Versorgungsstation Messmittel vorsieht, welche mit der Steuereinheit zusammenwirken, dass mittels der Messmittel Messwerte gemessen werden und dass die Messwerte über die Mittel zum Empfangen und/oder Senden von Daten an die erste Steuerzentrale übertragen werden.

13. Betriebsverfahren nach einem der Ansprüche 1 bis 12, **dadurch gekennzeichnet, dass** die Versorgungsstation eine Mehrzahl von Anschlussmitteln aufweist und dass die Betriebsbefehle für ein bestimmtes Anschlussmittel, für eine Teilmenge aller Anschlussmittel oder für alle Anschlussmittel der Versorgungsstation verarbeitet und/oder ausgeführt werden.

14. Betriebsverfahren nach einem der Ansprüche 1 bis 13, **dadurch gekennzeichnet, dass** Betriebsbefehle, welche über die Eingabeeinheit der Nutzerschnittstelle bereitgestellt werden, kabelgebunden der Steuereinheit zugeführt werden und/oder dass die Eingabeeinheit der Nutzerschnittstelle als eine externe, lokale Eingabeeinheit realisiert ist, wobei die externe, lokale Eingabeeinheit über eine Nahfeldkommunikationsroutine mit der Versorgungsstation kommuniziert.

15. Betriebsverfahren nach einem der Ansprüche 1 bis 14, **dadurch gekennzeichnet, dass** der erste Betriebsbefehl von der ersten Steuerzentrale und der zweite Betriebsbefehl von einem gleichen, gemeinsamen Mittel zum Empfangen und/oder Senden von Daten empfangen werden.

16. Betriebsverfahren nach einem der Ansprüche 1 bis 15, **dadurch gekennzeichnet, dass** von der Steuereinheit Prognosedaten den aktuellen Ladebedarf und/oder das aktuelle Entladevermögen betreffend bestimmt werden, wobei zur Bestimmung der Prognosedaten ein Ladegrad der Fahrzeugbatterie sowie eine aktuelle Lade- oder Entladeleistung ermittelt und/oder verarbeitet werden und/oder dass vom Fahrzeug bestimmte Prognosedaten empfangen werden.

17. Versorgungsstation zum Laden und/oder Entladen einer Fahrzeugbatterie eines elektrisch betreibbaren Fahrzeugs
- mit einer Steuereinheit, die ausgebildet ist zum Koordinieren eines Lade- und/oder Entladevorgangs,
- mit einer ersten Empfangseinheit als ein ersten Mittel zum Empfangen und/oder Senden von Daten, wobei die erste Empfangseinheit ausgebildet ist zum Empfang von Betriebsbefehlen von einer ersten externen, ortsfern vorgesehenen Steuerzentrale,
- mit einer zweiten Empfangseinheit als ein zweites Mittel zum Empfangen und/oder Senden von Daten, wobei die zweite Empfangseinheit ausgebildet ist zum Empfangen von Betriebsbefehlen von einer zweiten externen, ortsfern vorgesehenen Steuerzentrale,
- mit einer lokalen Nutzerschnittstelle, welche eine Anzeigeeinheit und eine zur Eingabe von Betriebsbefehlen ausgebildete Eingabeeinheit umfasst,
- mit einem Anschlussmittel, welches ausgebildet ist zum elektrischen Kontaktieren der Versorgungsstation mit der Fahrzeugbatterie, und
- mit Schaltmitteln und Übertragungsmitteln, welche mit dem Anschlussmittel und der Steuereinheit zusammenwirken und angeordnet und ausgebildet sind zur Realisierung eines uni- oder bidirektionalen Energieflusses zwischen einem Versorgungsnetz, an das die Versorgungsstation angeschlossen ist, und der Fahrzeugbatterie.

18. Versorgungsstation nach Anspruch 17, **dadurch gekennzeichnet, dass** die erste Empfangseinheit durch eine Mobilfunkschnittstelle gebildet ist und/oder dass die zweite Empfangseinheit als eine verdrahtete Schnittstelle realisiert ist.
